(19) Europäisches Patentamt
European Patent Office
Office européen des brevets

(11) **EP 2 404 340 B1**

(12) **EUROPEAN PATENT SPECIFICATION**

(45) Date of publication and mention
of the grant of the patent:
**07.11.2012 Bulletin 2012/45**

(21) Application number: **10705547.7**

(22) Date of filing: **16.02.2010**

(51) Int Cl.:
*H01M 4/04* (2006.01)      *H01M 4/133* (2010.01)
*H01M 4/1393* (2010.01)

(86) International application number:
**PCT/EP2010/000927**

(87) International publication number:
**WO 2010/099864 (10.09.2010 Gazette 2010/36)**

(54) **PROCESS FOR PREPARING ALLOY COMPOSITE NEGATIVE ELECTRODE MATERIAL FOR LITHIUM ION BATTERIES**

PROZESS ZUR HERSTELLUNG VON LEGIERUNGS-VERBUND-NEGATIVELEKTRODENMATERIAL FÜR LITHIUMIONENBATTERIEN

PROCÉDÉ DE PRÉPARATION D'UN MATÉRIAU D'ÉLECTRODE NÉGATIVE COMPOSITE EN ALLIAGE POUR DES BATTERIES LITHIUM-ION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.03.2009 CN 200910078988**
**11.09.2009 PCT/EP2009/006607**

(43) Date of publication of application:
**11.01.2012 Bulletin 2012/02**

(73) Proprietors:
• **Umicore**
**1000 Brussels (BE)**
• **Tsinghua University**
**Beijing 100084 (CN)**

(72) Inventors:
• **REN, Jianguo**
**Beijing 100084 (CN)**
• **HE, Xiangming**
**Beijing 100084 (CN)**
• **WANG, Li**
**Beijing 100084 (CN)**
• **YAN, Runbao**
**Beijing 100084 (CN)**
• **PU, Weihua**
**Beijing 100084 (CN)**
• **LI, Jianjun**
**Beijing 100084 (CN)**
• **GAO, Jian**
**Beijing 100084 (CN)**

(74) Representative: **Umicore RDI Patent Department**
**Kasteelstraat 7**
**2250 Olen (BE)**

(56) References cited:
**CN-A- 1 221 225      US-A1- 2007 003 835**

• **KE WANG, XIANGMING HE, LI WANG, JIANGUO REN, CHANGYIN JIANG, CHUNRONG WAN: "Preparation of Cu6Sn5-Encapsulated Carbon Microsphere Anode Materials for Li-ion Batteries by Carbothermal Reduction of Oxides" JOURNAL OF THE ELECTROCHEMICAL SOCIETY, vol. 153, no. 10, 2006, pages A1859-A1862, XP002556329 USA cited in the application**
• **LI Y ET AL: "Synthesis and characterization of ultrafine LiCoO2 powders by a spray-drying method" JOURNAL OF POWER SOURCES, ELSEVIER SA, CH, vol. 85, no. 2, 1 February 2000 (2000-02-01), pages 294-298, XP004189224 ISSN: 0378-7753**
• **DERRIEN G ET AL: "Nanostructured Sn-C Composite as an Advanced Anode Material in High-Performance Lithium-Ion Batteries" ADVANCED MATERIALS, WILEY-VCH VERLAG, WEINHEIM, DE, vol. 19, no. 17, 1 September 2007 (2007-09-01), pages 2336-2340, XP002522590 ISSN: 0935-9648 [retrieved on 2007-08-02]**

• FU L J ET AL: "Synthesis and electrochemical performance of novel core/shell structured nanocomposites" ELECTROCHEMISTRY COMMUNICATION, ELSEVIER, AMSTERDAM, NL, vol. 8, no. 1, 1 January 2006 (2006-01-01) , pages 1-4, XP025182002 ISSN: 1388-2481 [retrieved on 2006-01-01]

• FU L J ET AL: "Synthesis and electrochemical performance of novel core/shell structured nanocomposites" ELECTROCHEMISTRY COMMUNICATION, ELSEVIER, AMSTERDAM, NL, vol. 8, no. 1, 1 January 2006 (2006-01-01) ,

**Description**

The present invention relates to a process for preparing an alloy composite negative electrode material having a spherical carbon matrix structure for lithium ion batteries by spray-drying carbothermal reduction.

With the rapid development of electronics and information industry, a large number of portable electronic products such as mobile communication devices, notebook computers, digital products, etc. have been widely used, which create higher demands to batteries, especially rechargeable secondary batteries, by the public, such as: a higher capacity, a smaller size, a lighter weight, and a longer service life. Lithium ion batteries have been a hotspot for research by many people for their advantages of high energy density, high operation voltage, good loading property, rapid charging speed, safety without pollution, and without effects on memory, etc.

The alloy negative electrode materials for lithium ion batteries mainly include materials such as Sn-based, Sb-based, Si-based, Al-based carbon bearing materials, etc. Such alloy negative electrode materials have the advantages of large specific capacity, high lithium intercalation potential, low sensitivity to electrolytes, good conductivity, etc., but the alloy negative electrode material will expand in volume during charging and discharging, which results in the pulverization of the active material, the loss of electric contact, and the deterioration of the battery performance.

The alloy composite negative electrode material of a spherical structure composed of metal or metal alloy particles that are homogeneously distributed in a carbon matrix can relieve the volume expansion of the alloy, avoid the agglomeration of the nano-alloy and direct contact with the electrolyte, and has good electrochemical performances. This structure is further referred to as a metal or metal alloy-encapsulated carbon microsphere.

Currently, there are many processes for preparing alloy composite negative electrode materials of a such structure, such as the surface coating method, the layer-by-layer deposition method, the template method, and the reverse microemulsion method. The reverse microemulsion method is the major method used, and is presented in e.g. 'Preparation of Cu6Sn5-Encapsulated Carbon Microsphere Anode Material for Li-ion Battereis by Carbothermal Reduction of Oxides' by Wang, Ke et al., Journal of the Electrochemical Society (2006), 153(10), A1859-A1862. In this method a surfactant is dispersed in a water phase or an oil phase to form micelles; then a metal oxide is added therein and fully dispersed by stirring and ultrasonic vibrating etc.; then a polymerizable organic substance is added therein, so as to form a precursor substance of a carbon matrix structure; and finally it is thermally treated in a protective atmosphere, and the organic substance is carbonized to produce the material of a spherical metal bearing carbon matrix structure. The reverse microemulsion method can be used to prepare composite material of such a structure where the metal or metal alloy particles are homogeneously dispersed, and which has an integral morphology, where the thickness of the carbon layer can be controlled by varying the mass ratio of the reactants. However, this process has a low yield, and is difficult to achieve a scale production, and it is quite difficult to recover the surfactant after the completion of the reaction, and it easily results in pollution and wastes.

The above mentioned problem is solved by providing for an improved process for preparing the above described alloy composite negative electrode material by carbothermal reduction. The invention covers a process for preparing a negative electrode material for a lithium ion battery with a general formula A-M/Carbon, wherein A is a metal selected from the group consisting of Si, Sn, Sb, Ge and Al; and wherein M is different from A and M is at least one element selected from the group consisting of B, Nb, Cr, Cu, Zr, Ag, Ni, Zn, Fe, Co, Mn, Sb, Ca, Mg, V, Ti, In, Al, Ge; and comprising the steps of:

-    providing a solution comprising an organic polymer and either chemically reducible nanometric A- and M-precursor compounds, or nanometric Si and a chemically reducible M-precursor compound, when said metal A is Si;
-    spray-drying said solution whereby a A- and M-precursor bearing polymer powder is obtained, and
-    calcining said powder in a neutral atmosphere at a temperature between 500 and 1000°C for 3 to 10 hours whereby, in this carbothermal reduction, a carbon matrix is obtained bearing homogeneously distributed A-M alloy particles.

Preferably, the A- and M-precursor compounds are either one of an oxide, hydroxide, carbonate, oxalate, nitrate or acetate. More preferably, the A- and M-precursor compounds are A-oxide and M-oxide powders have a particle size between 20 and 80 nm. In the solution, instead of an A-oxide, nanometric metallic Si powder can also be used, and Si-M alloys are formed in the final product.

In a preferred embodiment, in the organic polymer solution, the weight ratio of A and M, present in the A- and M-precursor compound, to the carbon in the organic polymer is selected so as to provide for between 20 to 80 wt%, and preferably 30 to 60 wt% residual carbon in the carbon matrix. The amount of carbon consumed in the carbothermal reduction reaction can be calculated according to the chemical equation:

$$a \text{ A-oxide} + m \text{ M-oxide} + c \text{ C} \Rightarrow A_a M_m + c \text{ CO}, \text{ for example:}$$

$$4 \text{ SnO}_2 + \text{Sb}_2\text{O}_3 + 11 \text{ C} \Rightarrow 2 \text{ Sn}_2\text{Sb} + 11 \text{ CO}.$$

As there is provided an excess carbon through the organic polymer the carbothermal reduction is responsible for fully reducing the metal oxides, and embedding them in the excess carbon provided by the carbonization of the high molecular polymer. The knowledge of the carbothermal reduction reaction scheme, the carbon content of the polymer and the carbon content in the final product's metal alloy embedding structure determines the amount of polymer to be mixed initially with the metal oxides. In order to establish the yield of carbon from a given polymer TG/DSC tests are performed. For example: phenol formaldehyde is fully carbonized to hard carbon at 1000°C under an argon atmosphere, yielding a residual hard carbon content of 36.01 wt%.

In a preferred embodiment also, the organic polymer is a water- or alcohol-soluble phenolic resin.

It is also preferred that the step of spray-drying is carried out with an airflow spray dryer by way of concurrent drying. The solution is preferably evaporated at a temperature above 260 ° C whereby a gas flow is generated, whereafter the solution is atomized by the said gas flow at a pressure of 0.3-0.5 MPa. Inside the airflow spray dryer, the gas flow moves from an inlet to an outlet, whereby the temperature at the air inlet is preferably set at between 260 and 300°C, and the temperature at the outlet between 100 and 130°C.

Spray drying is an effective way for preparing composite anode materials. It is a low cost process which is easy to control, and is fit for mass production. In spray drying, the liquid drops of polymer are dispersed by the high-pressure air stream and solidificated at high temperature. The nano metaloxide particles (or other metal precursor compounds) are uniformly dispersed in the polymer solution. The particles produced by spray drying can be calcined directly. That is not the case for the reverse microemulsion method described before, where the emulsion products have to be washed and dried before calcination.

Spray drying is also an efficient method to control the particle size distribution of the polymer - metal precursor compound, by managing the feed rate and viscosity of the metal precursor bearing polymer solution and the air pressure. As the high molecular polymer chains are interlinking during the solidification of the solution, this provides for porous products in the form of carbon aerogels acquired after carbonization. As part of the carbon is also consumed to reduce the metal precursor compounds to pure metal, the volume of the reduced alloys is smaller than that of the metal oxides. The porosity of the obtained particles can alleviate the expansion and contraction of alloy during charge and discharge of the electrode. It is also advisable to use some pore-forming agents mixed with the raw materials.

By the process of the invention, a composite precursor powder of a negative electrode material for a lithium ion battery, with a general formula A-M/C is prepared by spray-drying. The precursor preferably consists of a homogeneously dispersed nanometric A-oxide or M-oxide powder embedded in an organic polymer, wherein A is a metal selected from the group consisting of Si, Sn, Sb, Ge and Al; and M is at least one element selected from the group consisting of B, Nb, Cr, Cu, Zr, Ag, Ni, Zn, Fe, Co, Mn, Sb, Ca, Mg, V, Ti, In, Al, Ge; and wherein A and M are different and are both present in said composite powder.

The alloy system used in the process for preparing the alloy composite negative electrode material for lithium ion batteries comprises:

a) Sn-M-C alloy (M = B, Nb, Cr, Cu, Zr, Ag, Ni, Zn, Fe, Co, Mn, Sb, Ca, Mg, V, Ti, In, Al, Ge);
b) Sb-M-C alloy (M = B, Nb, Cr, Cu, Zr, Ag, Ni, Zn, Fe, Co, Mn, Ca, Mg, V, Ti, In, Al, Ge);
c) Si-M-C alloy (M = B, Nb, Cr, Cu, Zr, Ag, Ni, Zn, Fe, Co, Mn, Sb, Ca, Mg, V, Ti, In, Al, Ge);
d) Ge-M-C alloy (M = B, Nb, Cr, Cu, Zr, Ag, Ni, Zn, Fe, Co, Mn, Sb, Ca, Mg, V, Ti, In, Al); and
e) Al-M-C alloy (M = B, Nb, Cr, Cu, Zr, Ag, Ni, Zn, Fe, Co, Mn, Sb, Ca, Mg, V, Ti, In, Ge).

In a best mode embodiment, the preparation process thereof comprises the steps of:

(1) Preparing raw materials: a nano-oxide required for preparing the alloy composite material and an organic high molecular polymer are weighed out in a stoichiometric ratio. For preparing the Si-M-C alloy, the nano-oxide is replaced by nanometric Si powder.
(2) Formulating a solution: the above organic high molecular polymer is added into a solvent to dissolve therein, and they are formulated a uniform solution of 10-20%; and then the nano-oxide is added therein, and stirred thoroughly.
(3) Spray-drying: the formulated solution is spray-dried to obtain mixed powder, wherein the drying is carried out with an airflow spray dryer by way of concurrent drying; a two-fluid spray nozzle is used as an atomization device; a peristaltic pump is used for feeding the solution as a feedstock at a speed of 10-20 ml/min; the gas flow at the spray nozzle is controlled by the pressure of compressed air to atomize at about 0.4 MPa; the temperature at the air inlet is controlled at 260-300°C, and the temperature at the outlet at 100-130°C.
(4) Carbothermal reduction: the mixed powder is calcined in a nitrogen or argon atmosphere at 500-1000°C for 3-10 hours to obtain the alloy composite negative electrode material having a spherical encapsulating structure (as described before) for lithium ion batteries which has an integral morphology and a uniform distribution.

The raw materials used in this technique are mainly in two categories of A+P, in which A can be various oxides, such as one or a mixture of several of $B_2O_3$, $SnO_2$, $Co_3O_4$, $Sb_2O_3$, AgO, $Cu_2O$, MgO, CuO, $ZrO_2$, NiO, ZnO, $Fe_2O_3$, $MnO_2$, CaO, $V_2O_5$, $Nb_2O_5$, TiO2, $Al_2O_3$, $Cr_2O_3$ , InO, and $GeO_2$, and P is an organic high molecular polymer, such as one of a water-soluble phenolic resin, an alcohol-soluble phenolic resin, a urea-formaldehyde resin, a furfural resin, an epoxy resin, polyacrylonitrile, polystyrene, polychlorovinyl, polyvinylidene chloride, polyvinyl alcohol, and polyfurfuryl alcohol.

The solvent used for dissolving the above organic high molecular polymer is one of water, ethanol, acetone, toluene, xylene, tetrahydrofuran, N,N-dimethylformamide, N-methylpyrrolidone and chloroform.

The alloy composite negative electrode material for lithium ion batteries prepared by using this technique has excellent electrochemical performances, the technique has low costs and is a simple process, and it can be directly used for large-scale industrialized production of the alloy composite negative electrode materials for lithium ion batteries.

Fig. 1 is a SEM graph of $Cu_6Sn_5$/C composite material synthesized in the present invention.

Fig. 2 is a XRD pattern of $Cu_6Sn_5$/C composite material synthesized in the present invention.

Fig. 3 is the first charging and discharging curve of $Cu_6Sn_5$/C composite material synthesized in the present invention.

Fig. 4 is a cycle performance curve of $Cu_6Sn_5$/C composite material synthesized in the present invention for the first 50 cycles.

Fig. 5 is a cycle performance curve of pure hard carbon obtained from decomposing phenolic resin.

Fig. 6 is the particle size distribution of $Sn_2Sb$/C composite material Fig. 7 is a performance curve of $Sn_2Sb$/C composite material synthesized in the present invention for the 1st, 10th and 20th cycle.

Fig. 8 is a cycle performance curve of $Sn_2Sb$/C composite material synthesized in the present invention for the first 20 cycles (capacity and capacity retention).

The technical solution of the present invention will be further illustrated hereinbelow in conjunction with the embodiments:

Example 1:

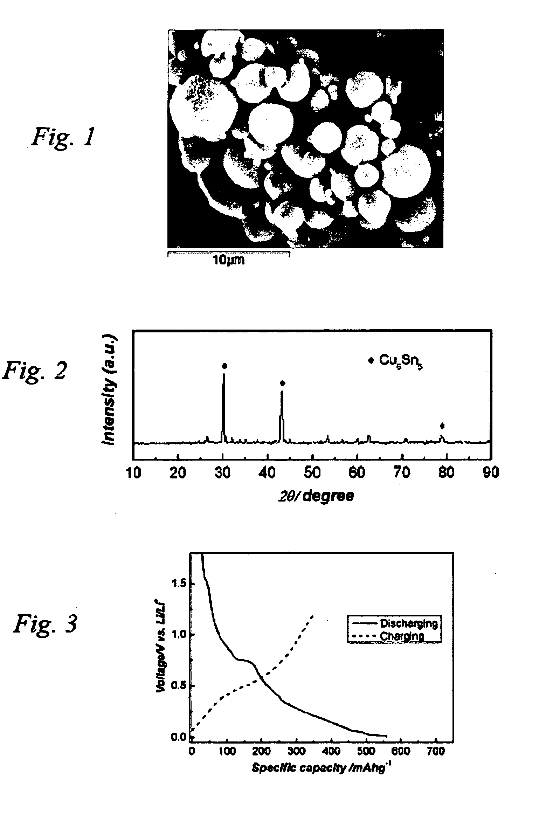

First, CuO and $SnO_2$ nano-oxides are weighed out in a molar ratio of 6:5 of Cu:Sn; then a water-soluble phenolic resin solution of 60% is weighed out and taken in a formulation ratio of the resin: $(CuO+SnO_2)$ = 5:3 by weight; and deionized water is added therein to formulate a solution of 15wt%. The obtained solution is dried with an airflow spray dryer, and the feedstock solution is charged with a peristaltic pump at a speed of 15 ml/min; the gas flow at the spray nozzle is controlled by the pressure of compressed air to atomize at about 0.4 MPa; the temperature at the air inlet is controlled at 300°C, and the temperature at the outlet at 130°C; and the air at the outlet is released after first-order vortex separation. The phenolic resin embedding the metal oxides obtained by spray drying is calcined under the protection of high purity nitrogen at 1000°C for 5 hours, and the $Cu_6Sn_5$/C composite negative electrode material having a spherical morphology is obtained. A SEM graph is given in Fig. 1; an XRD pattern of the $Cu_6Sn_5$/C composite material in Fig. 2. The final carbon content was set at 30 wt%. The amount of carbon consumed in carbothermal reduction reaction can be calculated according to the following equation:

$$6CuO + 5SnO_2 + 16C => Cu_6Sn_5 + 16CO$$

The excess phenolic formaldehyde resin is added to produce the excess carbon for compositing with $Cu_6Sn_5$ alloy. As for the sample of $Cu_6Sn_5$/C, the synthesis with total mass balance is as follows:

|  | 6CuO | + 55SnO$_2$ | +16C = | Cu$_6$Sn$_5$ | + 16CO(g) |
|---|---|---|---|---|---|
| Mol. wt. | 480 | 753.45 | 192 | 1032.14 |  |
| Masses (g) | 4.8 | 7.53 | 1.92 | 10.32 |  |

The raw materials of 7.53g $SnO_2$ and 4.8g CuO are reduced to form 10.32g $Cu_6Sn_5$. 1.92 g carbon is consumed to reduce $SnO_2$ and CuO. The final product contains 30% carbon (4.42g carbon). The total mass of carbon is 6.34g. The total phenol formaldehyde resin mass is 17.61 g, which is calculated by the following formula: 6.34 / 36.01% = 17.61, where, as said above, 36.01% is the residual carbon ratio of phenolic formaldehyde resin when heated in 1000°C under inert atmosphere.

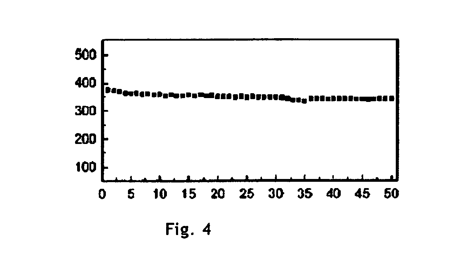

The final $Cu_6Sn_5$/C composite material is measured - see Fig. 4 (capacity in mAh/g versus cycle number) - as having a first charging specific capacity of 370 mAh/g at room temperature with a lithium foil as a counter electrode, and the rate of the capacity maintenance is 92% after 50 cycles of charging and discharging.

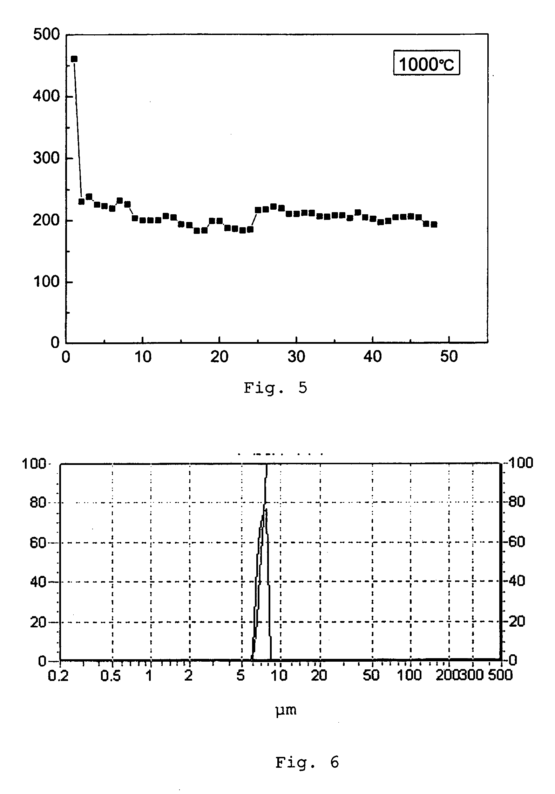

The contribution of the metal alloy is shown by comparing the specific capacity of Sn-Cu/C with that of pure hard carbon obtained by heating phenolic resin to 1000°C under inert atmosphere: see Figure 5 (showing capacity in mAh/g versus cycle number).

Example 2:

First, $Co_3O_4$ and $SnO_2$ nano-oxides are weighed out in a molar ratio of 1:2 of Co:Sn; then a water-soluble phenolic resin solution of 60% is weighed out and taken in a formulation ratio of the resin: $(Co_3O_4+SnO_2)$ = 5:3 by weight; and deionized water is added therein to formulate a solution of 15 wt%. The obtained solution is dried with an airflow spray dryer, and the feedstock solution is charged with a peristaltic pump at a speed of 15 ml/min; the gas flow at the spray nozzle is controlled by the pressure of compressed air to atomize at about 0.4 MPa; the temperature at the air inlet is controlled at 300°C, and the temperature at the outlet at 120°C; and the air at the outlet is released after first order vortex separation. The phenolic resin bearing tin dioxide and tricobalt tetraoxide bead powder, as obtained by spray drying, is calcined under the protection of high purity nitrogen at 900°C for 10 hours, and the $CoSn_2/C$ composite negative electrode material of a spherical carbon matrix structure is finally obtained. The $CoSn_2/C$ composite material is measured as having a first charging specific capacity of 440 mAh/g at room temperature with a lithium foil as a counter electrode, and the rate of the capacity maintenance was 90.8% after 20 cycles of charging and discharging.

Example 3:

First, $Sb_2O_3$ and $SnO_2$ nano-oxides are weighed out in a molar ratio of 1:1 of Sb:Sn; then an alcohol-soluble phenolic resin powder is weighed out and taken in a formulation ratio of the resin: $(Sb_2O_3+SnO_2)$ = 5:1 by weight; and ethanol is added therein to formulate a solution of 20wt%. The obtained solution is dried with an airflow spray dryer, and the feedstock solution is charged with a peristaltic pump at a speed of 10 ml/min; the gas flow at the spray nozzle is controlled by the pressure of compressed air, to atomize about 0.4 MPa; the temperature at the air inlet is controlled at 300°C, and the temperature at the outlet at 100°C; and the air at the outlet is released after first-order vortex separation. The phenolic resin bearing the tin dioxide and antimony trioxide bead powder obtained by spray drying is calcined under the protection of high purity nitrogen at 800°C for 10 hours, and the SnSb/C composite negative electrode material having a spherical carbon matrix structure is obtained. The SnSb/C composite material is measured as having a first charging specific capacity of 400 mAh/g at room temperature with a lithium foil as a counter electrode, and the rate of the capacity maintenance is 85.1% after 50 cycles of charging and discharging.

Example 4:

First, nano Si powder and CuO nano-oxide are weighed out in a molar ratio of 1:1 of Si:Cu, then an alcohol-soluble phenolic resin powder is weighted out and taken in a formulation ratio of the resin: (Si+CuO) = 5:3 by weight, and ethanol is added therein to formulate a solution of 20wt%. The obtained solution is dried with an airflow spray dryer, and the feedstock solution is charged with a peristaltic pump at a speed of 20 ml/min; the gas flow at the spray nozzle is controlled by the pressure of compressed air, to atomize at about 0.4 MPa; the temperature at the air inlet is controlled at 300°C, and the temperature at the outlet is controlled at 110°C; and the air at the outlet is released after the first order vortex separation. The phenolic resin bearing the nano Si powder and copper oxide bead powder obtained by spray drying is calcined under the protection of high purity nitrogen at 900°C for 5 hours, and the Si-Cu/C composite negative electrode material of a spherical carbon matrix structure is obtained. The Si-Cu/C composite material is measured as having a first charging specific capacity of 520 mAh/g at room temperature with a lithium foil as a counter electrode, and the rate of the capacity maintenance is 94.7% after 20 cycles of charging and discharging.

Example 5:

Similar to Example 3, $Sb_2O_3$ and $SnO_2$ nano-oxides are weighed out in a molar ratio of 1:2 of Sb:Sn. As the final product contains 30 wt% carbon, the preparation of the raw materials is based on the residual carbon of phenol formaldehyde resin and the following chemical reaction equation:

|  | $4SnO_2$ | $+ Sb_2O_3$ | $+ 11C$ | $\rightarrow 2Sn_2Sb$ | $+ 11CO$ |
|---|---|---|---|---|---|
| MW | 602.84 | 291.51 | 132 | 718.35 | |
| Mass (g) | 8.39 | 4.06 | 1.84 | 10 | |

The raw materials of 8.39g $SnO_2$ and 4.06g $Sb_2O_3$ are reduced to form 10g $Sn_2Sb$. 1.84 g carbon is consumed to reduce SnO2 and Sb2O3. The final product contains 30% carbon (4.29g carbon). The total mass of carbon is 6.13g. The total phenol formaldehyde resin mass is 17.02 g, which is calculated by (6.13/36.01%). Th phenol formaldehyde resin is carbonized to hard carbon aerogel after calcination at high temperature. Many pores were produced in the particle, which can alleviate volume expansion and contraction of electrode. The specific surface area of $Sn_2Sb/C=3/2$ is given in Table 1. By using the Barrett-Joyner-Halenda (BJH) equation, the pore radius is calculated to be 19.019 - 19.231 Å. The pore radius can be enlarged by controlling the process parameters to improve the cycle performance.

Table 1 Specific Surface Area and Pore Volume of $Sn_2Sb/C=3/2$

| Sample | Specific Surface Area m²/g | Pore Volume cc/g | Pore Radius Å |
|---|---|---|---|
| Sn2Sb/C=3/2 calcined at 900°C | 150.899 | 0.018 | 19.231 |
| Sn2Sb/C=3/2 calcined at 1000°C | 113.664 | 0.019 | 19.019 |

The particle distribution of $Sn_2Sb/C$ calcined at 900°C is shown in Fig. 6. The d0 = 3.76 $\mu$m, d25= 6.50 $\mu$m, d50 = 7.07 $\mu$m, d90 = 7.64 $\mu$m.

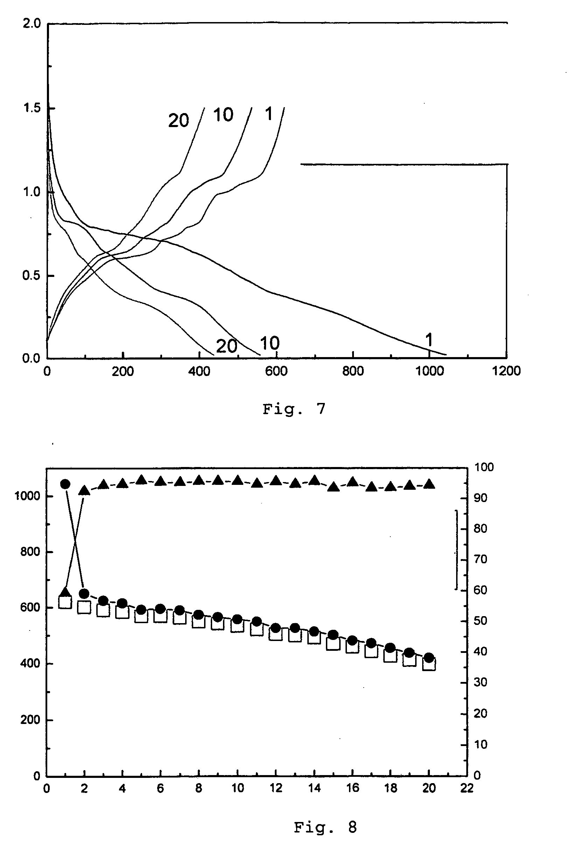

Fig.7 and Fig.8 show the electrochemical test results of the $Sn_2Sb/C$ composite. The first discharge/charge capacity of $Sn_2Sb/C$ composite is 1044 mAh/g and 618 mAh/g, respectively. The first cycle efficiency is 59%. After 20 cycles, the charge capacity is 411.3 mAh/g and capacity retention is 66.6%. In Fig. 7 the voltage (V) is shown vs. the capacity in mAh/g during the 1st, 10th and 20th cycle. In Fig. 8 the cycle number is given below, the capacity to the left, and the capacity retention to the right. The squares give the charge capacity, the circles the discharge capacity, and the triangles the efficiency (charge/discharge capacity x 100).

**Claims**

1. A process for preparing a negative electrode material for a lithium ion battery with a general formula A-M/Carbon, wherein A is a metal selected from the group consisting of Si, Sn, Sb, Ge and Al; and wherein M is different from A and M is at least one element selected from the group consisting of B, Nb, Cr, Cu, Zr, Ag, Ni, Zn, Fe, Co, Mn, Sb, Ca, Mg, V, Ti, In, Al, Ge; and comprising the steps of:

   - providing a solution comprising an organic polymer and either chemically reducible nanometric A- and M-precursor compounds, or nanometric Si and a chemically reducible M-precursor compound, when said metal A is Si;
   - spray-drying said solution whereby a A- and M-precursor bearing polymer powder is obtained, and
   - calcining said powder in a non-oxidizing atmosphere at a temperature between 500 and 1000°C for 3 to 10 hours whereby a carbon matrix is obtained bearing homogeneously distributed A-M alloy particles.

2. A process for preparing a negative electrode material according to claim 1, wherein said chemically reducible A- and M-precursor compounds are either one of an oxide, hydroxide, carbonate, oxalate, nitrate or acetate.

3. A process for preparing a negative electrode material according to claims 1 or 2, wherein in the step of providing said solution, the weight ratio of A and M, present in the A- and M-precursor compounds, to the carbon in the organic polymer is selected so as to provide for between 20 to 80 wt%, and preferably 30 to 60 wt% residual carbon in said carbon matrix.

4. A process for preparing a negative electrode material according to any one of claims 1 to 3, wherein said organic polymer is a water- or alcohol-soluble phenolic resin.

5. A process for preparing a negative electrode material according to any one of claims 1 to 4, wherein said A- and M-precursors are oxide powders have a particle size between 20 and 80 nm.

6. A process for preparing a negative electrode material according to any one of claims 1 to 5, wherein said step of spray-drying is carried out with an airflow spray dryer by way of concurrent drying.

7. A process for preparing a negative electrode material according to claim 6, wherein said spray-drying is carried out by evaporating said solution at a temperature above 260°C whereby a gas flow is generated, and atomizing said solution by said gas flow at a pressure of 0.3-0.5 MPa.

8. A process for preparing a negative electrode material according to claims 6 or 7, wherein said gas flow moves inside said airflow spray dryer from an inlet to an outlet, whereby the temperature at the air inlet is between 260 and 300°C, and the temperature at the outlet between 100 and 130°C.

**Patentansprüche**

1. Verfahren zur Herstellung eines Materials für negative Elektrode für eine Lithium-Ionen-Batterie mit einer allgemeinen Formel A-M/Kohlenstoff, wobei A ein Metall ist, das ausgewählt ist aus der Gruppe, bestehend aus Si, Sn, Sb, Ge und Al; und wobei M anders als A ist und M mindestens ein Element ist, das ausgewählt ist aus der Gruppe, bestehend aus B, Nb, Cr, Cu, Zr, Ag, Ni, Zn, Fe, Co, Mn, Sb, Ca, Mg, V, Ti, In, Al, Ge; und umfassend die folgenden Schritte:

   - Bereitstellen einer Lösung, die ein organisches Polymer und entweder chemisch reduzierbare nanometrische A- und M-Vorläuferverbindungen oder nanometrische Si- und chemisch reduzierbare M-Vorläuferverbindung umfasst, wenn das Metall A Si ist;
   - Sprühtrocknen der Lösung, wodurch ein A- und M-Vorläufer enthaltendes Polymerpulver erhalten wird, und
   - Kalzinieren des Pulvers in einer nicht oxidierenden Atmosphäre für 3 bis 10 Stunden bei einer Temperatur zwischen 500 und 1000 °C, wodurch eine Kohlenstoffmatrix erhalten wird, die homogen verteilte A-M-Legierungsteilchen enthält.

2. Verfahren zur Herstellung eines Materials für negative Elektrode nach Anspruch 1, wobei die chemisch reduzierbaren A- und M-Vorläuferverbindungen eines Oxids, Hydroxids, Carbonats, Oxalats, Nitrats oder Acetats sind.

3. Verfahren zur Herstellung eines Materials für negative Elektrode nach Anspruch 1 oder 2, wobei in dem Schritt des Bereitstellens der Lösung das Gewichtsverhältnis von A und M, die in den A- und M-Vorläuferverbindungen vorhanden sind, zu dem Kohlenstoff in dem organischen Polymer derart ausgewählt wird, dass zwischen 20 bis 80 Gew.-% und vorzugsweise 30 bis 60 Gew.-% Restkohlenstoff in der Kohlenstoffmatrix bereitgestellt werden.

4. Verfahren zur Herstellung eines Materials für negative Elektrode nach einem der Ansprüche 1 bis 3, wobei das organische Polymer ein wasser- oder alkohollösliches Phenolharz ist.

5. Verfahren zur Herstellung eines Materials für negative Elektrode nach einem der Ansprüche 1 bis 4, wobei die A- und M-Vorläufer Oxidpulver mit einer Teilchengröße zwischen 20 und 80 nm sind.

6. Verfahren zur Herstellung eines Materials für negative Elektrode nach einem der Ansprüche 1 bis 5, wobei der Schritt des Sprühtrocknens mit einem Luftstrom-Sprühtrockner durch gleichzeitiges Trocknen ausgeführt wird.

7. Verfahren zur Herstellung eines Materials für negative Elektrode nach Anspruch 6, wobei das Sprühtrocknen durch Verdampfen der Lösung bei einer Temperatur über 260 °C, wodurch ein Gasstrom erzeugt wird, und Zerstäuben der Lösung durch den Gasstrom bei einem Druck von 0,3 bis 0,5 MPa ausgeführt wird.

8. Verfahren zur Herstellung eines Materials für negative Elektrode nach Anspruch 6 oder 7, wobei sich der Gasstrom in dem Luftstrom-Sprühtrockner von einem Einlass zu einem Auslass bewegt, wodurch die Temperatur an dem Lufteinlass zwischen 260 und 300 °C und die Temperatur an dem Auslass zwischen 100 und 130 °C liegt.

**Revendications**

1. Procédé de préparation d'un matériau d'électrode négative pour une batterie lithium-ion avec une formule générale A-M/Carbone dans laquelle A est un métal choisi dans le groupe constitué par Si, Sn, Sb, Ge et Al, et dans laquelle M est différent de A et M est au moins un élément choisi dans le groupe constitué par B, Nb, Cr, Cu, Zr, Ag, Ni, Zn, Fe, Co, Mn, Sb, Ca, Mg, V, Ti, In, Al et Ge, comprenant les étapes consistant à :

- se procurer une solution comprenant un polymère organique et soit des composés précurseurs de A et M nanométriques réductibles chimiquement, soit du Si nanométrique et un composé précurseur de M réductible chimiquement quand ledit métal A est Si ;
- sécher par atomisation ladite solution pour obtenir ainsi une poudre de polymère contenant des précurseurs de A et M ; et
- calciner ladite poudre dans une atmosphère non oxydante à une température comprise entre 500 et 1000 °C pendant 3 à 10 heures pour obtenir ainsi une matrice de carbone contenant des particules d'alliage A-M distribuées de façon homogène.

2. Procédé de préparation d'un matériau d'électrode négative selon la revendication 1, dans lequel lesdits composés précurseurs de A et M réductibles chimiquement sont des oxydes, des hydroxydes, des carbonates, des oxalates, des nitrates ou des acétates.

3. Procédé de préparation d'un matériau d'électrode négative selon la revendication 1 ou 2, dans lequel, à l'étape d'obtention de ladite solution, le rapport pondéral entre A et M présents dans les composés précurseurs de A et M et le carbone dans le polymère organique est choisi de manière à obtenir entre 20 et 80 % en poids, et de préférence 30 et 60 % en poids de carbone résiduel dans ladite matrice de carbone.

4. Procédé de préparation d'un matériau d'électrode négative selon l'une quelconque des revendications 1 à 3, dans lequel ledit polymère organique est une résine phénolique soluble dans l'eau ou un alcool.

5. Procédé de préparation d'un matériau d'électrode négative selon l'une quelconque des revendications 1 à 4, dans lequel lesdits précurseurs de A et M sont des poudres d'oxydes ayant une taille de particules comprise entre 20 et 80 nm.

6. Procédé de préparation d'un matériau d'électrode négative selon l'une quelconque des revendications 1 à 5, dans lequel ladite étape de séchage par atomisation est réalisée avec un sécheur-atomiseur à circulation d'air au moyen d'un séchage simultané.

7. Procédé de préparation d'un matériau d'électrode négative selon la revendication 6, dans lequel ledit séchage par atomisation est réalisé en évaporant ladite solution à une température supérieure à 260 °C pour générer ainsi un écoulement gazeux, et en atomisant ladite solution avec ledit écoulement gazeux à une pression de 0,3-0,5 MPa.

8. Procédé de préparation d'un matériau d'électrode négative selon la revendication 6 ou 7, dans lequel ledit écoulement gazeux se déplace à l'intérieur dudit sécheur-atomiseur à circulation d'air d'une entrée à une sortie, la température à l'entrée d'air se situant entre 260 et 300 °C, et la température à la sortie entre 100 et 130 °C.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG, KE et al.** Preparation of Cu6Sn5-Encapsulated Carbon Microsphere Anode Material for Li-ion Battereis by Carbothermal Reduction of Oxides. *Journal of the Electrochemical Society,* 2006, vol. 153 (10), A1859-A1862